# EUROPEAN PATENT APPLICATION

(11) **EP 0 716 551 A2**
(43) Date of publication of application: **12.06.1996**
(21) Application number: 95119166.7
(22) Date of filing: 06.12.1995
(51) Int. Cl.: H04N 9/83

(54) **Helper signal processing circuit for pal plus video cassette recorder**

(30) Priority: 07.12.1994 KR 9433148; 09.12.1994 KR 9433500; 09.12.1994 KR 9433503; 29.03.1995 KR 9506901
(71) Applicant: LG ELECTRONICS INC., Seoul (KR)
(72) Inventor: Cho, Jin-Ho, Seoul (KR)
(74) Representative: Cohausz & Florack

(57) **Abstract**

An improved helper signal processing circuit for a PAL plus video cassette tape recorder capable of achieving a better resolution of a picture by demodulating a helper signal in a recording mode and by converting the thusly demodulated helper signal into the original signal form in a reproducing mode, which includes a helper signal remodulating unit for filtering a reproducing luminance signal or a base band helper signal in accordance with an operation mode, for mixing the thusly filtered to a color subcarrier wave frequency of which a phase is properly adjusted, and remodulating a helper signal; a reproducing color signal outputting unit for delaying a recording color signal or a reproducing color signal for a predetermined time in accordance with an operation mode, adding the helper signal remodulated by the helper signal remodulating unit to the thusly delayed color signal in accordance with the helper marker signal, and outputting a color signal having the color signal or the remodulated helper signal in accordance with a PAL identification signal; and a reproducing luminance signal outputting unit for removing a helper signal from the output signal of the delay unit in accordance with a helper marker signal, adding a signal bit data to the luminance signal in which a helper signal is removed, and selectively outputting either a the base band helper signal or a recording luminance signal, which is outputted in accordance with an operation mode, respectively, or the luminance signal in which a signal bit data is added in accordance with a PAL identification signal.

## Description

### BACKGROUND OF THE INVENTION

### 1. Field of the Invention

The present invention relates to a helper signal processing circuit for a PAL plus video cassette tape recorder, and in particular to a improved helper signal processing circuit for a PAL plus video cassette tape recorder capable of achieving a better resolution of a picture by demodulating a helper signal in a recording mode and by converting the thusly demodulated helper signal into the original signal form in a reproducing mode.

### 2. Description of the Conventional Art

Conventionally, a band-pass of a vertical helper signal having information with respect to a PAL plus broadcast signal is 3.5Mhz. Therefore, the helper signal is modulated in a color subcarrier wave region Fsc, and when recording in a S-VHS VCR, since the signal is recognized as a chrome signal, it is recorded on a chrome region. That is, since the chrome signal recording band-pass is about 1Mhz, it is impossible to record the full band-pass with respect to the help signal. In addition, when reproducing the signal, since the helper signal is read from the chrome region, a desired resolution of a picture cannot be achieved.

### SUMMARY OF THE INVENTION

Accordingly, it is an object of the present invention to provide a helper signal processing circuit for a PAL plus video cassette tape recorder, which overcome the problems encountered in the conventional helper signal processing unit for a PAL plus video cassette tape recorder.

It is another object of the present invention to provide a improved helper signal processing circuit for a PAL plus video cassette tape recorder capable of achieving a better resolution of a picture by demodulating a helper signal in a recording mode and by converting the thusly demodulated helper signal into the original signal form in a reproducing mode.

To achieve the above objects, in accordance with a first embodiment of the present invention, there is provided a helper signal processing circuit for a PAL plus video cassette tape recorder, which includes a signaling bit processing unit for generating a signal bit data, a signal bit marker and a PAL identification signal in accordance with a combined video signal or a base band helper signal each containing an AM helper signal in accordance with a certain operation mode; a color subcarrier wave outputting unit for receiving the combined video signal or the base band helper signal and for generating a helper marker signal and a color subcarrier wave in accordance with a certain operation mode; a delay unit for delaying a combined video signal and a reproducing luminance signal or a base band helper signal in accordance with a certain operation mode; a helper signal demodulating unit for demodulating the AM helper signal contained in the combined video signal in accordance with the color subcarrier wave in a recording mode; a recording PAL plus signal output unit for generating a base band helper signal by switching the output signal of the helper signal demodulating unit and the delay unit in accordance with the helper marker signal, adding the signal bit data to the base band helper signal in accordance with the signal bit marker, switching the AM helper signal and the base band helper signal contained in the signal bit marker in accordance with the signal bit marker, and dividing the thusly switched into a recording luminance signal and a recording color signal; a helper signal remodulating unit for filtering a reproducing luminance signal or a base band helper signal in accordance with an operation mode, for mixing the thusly filtered to a color subcarrier wave frequency of which a phase is properly adjusted, and remodulating a helper signal; a reproducing color signal outputting unit for delaying a recording color signal or a reproducing color signal for a predetermined time in accordance with an operation mode, adding the helper signal remodulated by the helper signal remodulating unit to the thusly delayed color signal in accordance with the helper marker signal, and outputting a color signal having the color signal or the remodulated helper signal in accordance with a PAL identification signal; and a reproducing luminance signal outputting unit for removing a helper signal from the output signal of the delay unit in accordance with a helper marker signal, adding a signal bit data to the luminance signal in which a helper signal is removed, and selectively outputting either a the base band helper signal or a recording luminance signal, which is outputted in accordance with a operation mode, respectively, or the luminance signal in which a signal bit data is added in accordance with a PAL identification signal.

To achieve the above objects, in accordance with a second embodiment of the present invention, there is provided a helper signal processing circuit for a PAL plus video cassette tape recorder, which includes a reproducing signal processing unit for dividing a combined video signal into a luminance signal and a color signal, removing the helper signal from the thusly divided luminance signal, outputting a reproducing luminance signal, adding a helper signal to the thusly divided color signal, and outputting a reproducing color signal; and a recording signal processing unit for demodulating the helper signal of the combined video signal, adding the thusly demodulated helper signal to the reproducing luminance signal outputted from the reproducing signal processing unit, outputting a recording luminance signal, removing the helper signal out of the reproducing color signal, and outputting a recording color signal.

### BRIEF DESCRIPTION OF THE DRAWINGS

Fig. 1 is a block diagram of a helper signal processing circuit of a first embodiment according to the present invention.

Fig. 2 is a wave form of an AM helper signal according to the present invention.

Fig. 3 is a wave form of a base band helper signal according to the present invention.

Fig. 4 is a graph of a characteristic of a band-pass filter according to the present invention.

Fig. 5 is a graph of a characteristic of a low-pass filter according to the present invention.

Fig. 6 is a wave form of a helper maker signal according to the present invention.

Fig. 7 is a wave form of a signal bit and a signal bit maker according to the present invention.

Fig. 8 is a graph of a characteristic of a Nyquest low band-pass filter according to the present invention.

Fig. 9 is a block diagram of a circuit for generating a base band helper signal using a combined video signal and a demodulated helper signal of Fig. 1 according to the present invention.

Figs. 10 through 12 are block diagrams of a circuit for preventing a clamping error in a helper signal demodulation mode according to the present invention.

Fig. 13 is a block diagram of a helper signal remodulation circuit of Fig. 1 according to the present invention.

Fig. 14 is a wave form of a main signal of Fig. 13 according to the present invention.

Fig. 15 is a block diagram of a helper signal remodulation circuit of another embodiment of the present invention.

Fig. 16 is a wave form of a main signal of Fig. 15 according to the present invention.

Fig. 17 is a wave form of a helper maker signal to explain the generation of the same according to the present invention.

Fig. 18 is a block diagram of a helper signal processing circuit for a PAL plus video tape cassette recorder of a second embodiment according to the present invention.

Figs. 19A and 19B are wave forms of a brightness signal to explain its processing according to the present invention.

Fig. 20 shows a block diagram of a helper signal processing unit for a PAL plus video cassette tape recorder of a third embodiment according to the present invention.

### DETAILED DESCRIPTION OF THE INVENTION

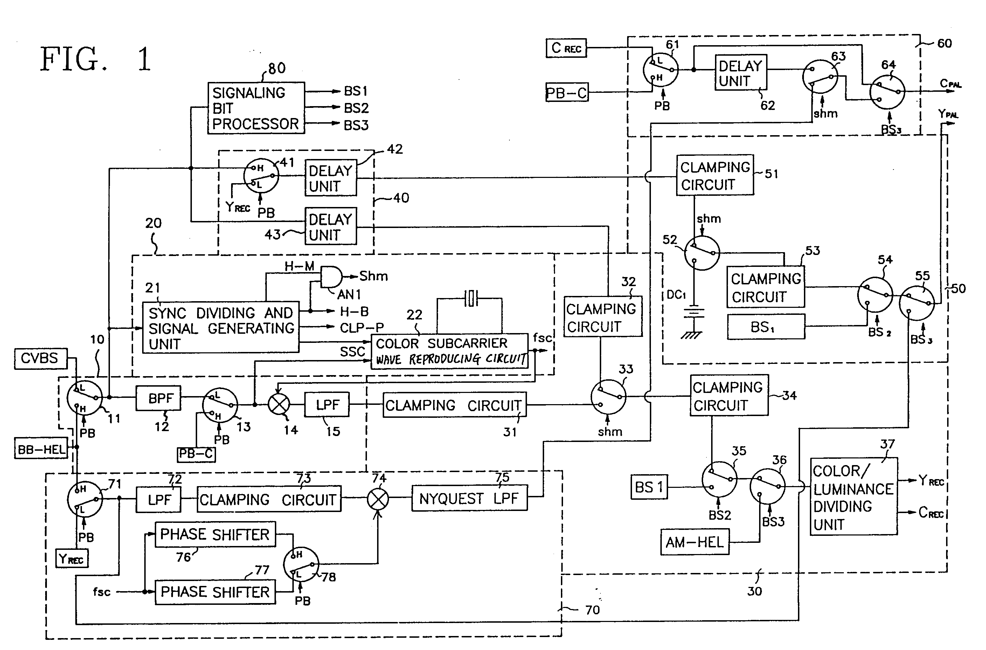

Fig. 1 shows a helper signal processing circuit for a PAL plus video tape cassette tape recorder (hereinafter called a "VCR") of a first embodiment according to the present invention, which includes a signaling bit processor 80 for receiving a combined video signal CVBS containing a AM helper signal AM-HEL AM-modulated in the color subcarrier wave region Fsc in a recording mode in which a play back signal PB is a low level and for receiving a base band helper signal BB-HEL which is a helper signal reproduced in a reproduction mode in which a play back signal is a high level in a reproduction mode and for outputting a signaling bit data BS1, a signaling bit marker BS2, and a PAL plus identifying signal BS3, a helper signal demodulator 10 for demodulating the AM helper signal AM-HEL of the combined video signal in a recording mode using a color subcarrier wave Fsc and for removing a band-pass component from the thusly demodulated signal, a delay unit 40 for delaying the AM helper signal AM-HEL and the reproducing brightness signal Yrec in a reproducing mode for a predetermined time and for delaying the base band helper signal which is a reproduced helper signal in a reproducing mode for a predetermined time, a color subcarrier wave output circuit 20 for generating a helper marker signal H-M, She, a horizontal blanking signal H-B, a clamping pulse CLP-P, a sandcastle signal SSC and for generating a color subcarrier wave Fsc locked from the sandcastle signal SSC to an U-axis, an output circuit 30 for generating a helper signal of a base band using an output signal of the helper signal demodulator 10 and a output signal of the delay unit 40 and for adding a signaling bit to the base band helper signal and for separating the thusly added signal into a recording brightness signal Yres and a recording color signal Cres, a helper signal remodulator 70 for selecting a recording brightness signal Yrec in a recording mode and a base band helper signal in a reproducing mode, for extracting a helper signal from the thusly selected signal and remodulating the thusly extracted helper signal using a color subcarrier wave, a reproducing color signal output circuit 60 for selecting a recording color signal Cres in a recording mode and a reproducing color signal PB-C in a reproducing mode and for adding the helper signal remodulated by the helper signal remodulator 70 to the thusly selected color signal in accordance with a helper marker signal Shm, and a reproducing brightness signal output circuit 50 for outputting a recording brightness signal Yrec delayed by the delay unit 40 and a reproduction brightness signal Ypal which is obtained by removing the helper signal from the base band helper signal.

The operation and effects of the present invention will now be explained with reference to the accompanying drawings.

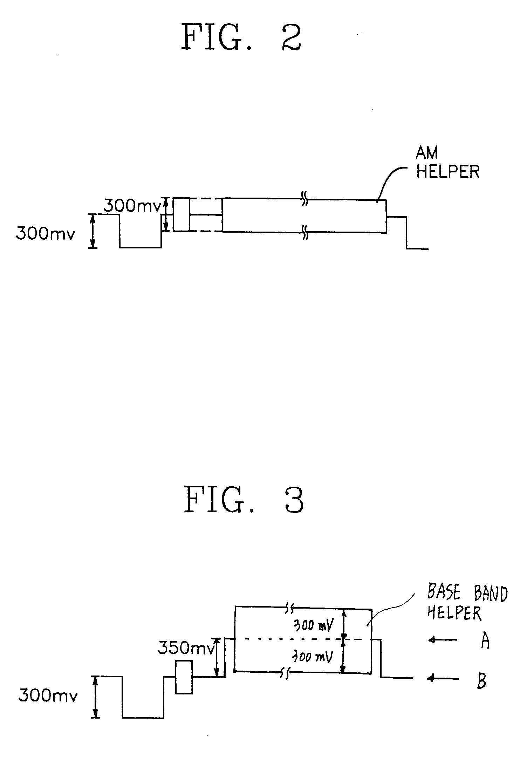

To begin with, in order to convert the combined PAL plus video signal, the AM helper signal AM-HEL having a certain format as shown in Fig. 2 is converted into a base band helper signal BB-HEL having a certain format as shown in Fig. 3, this conversion process will now be explained.

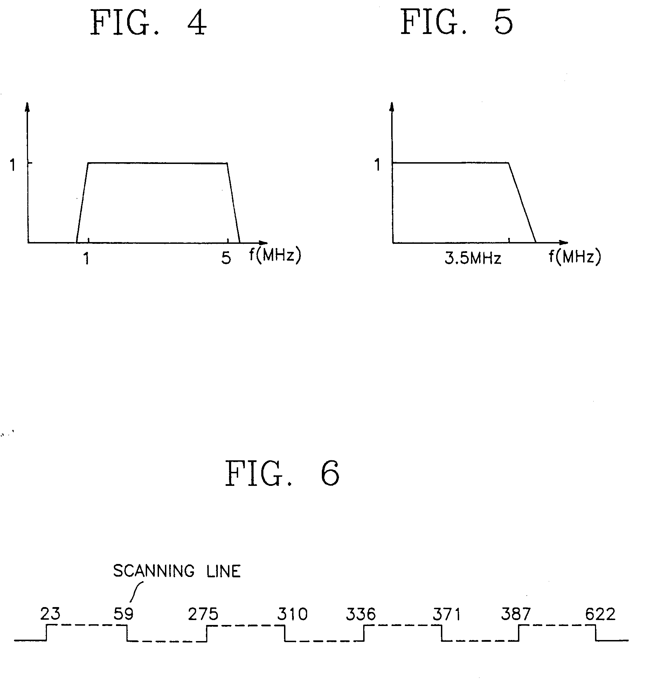

When a combined video signal CVBS transmitted from a broadcasting station is input into the helper signal modulator 10, the combined video signal is inputted into the band-pass filter 12 through a switch 11 to which a play back signal PB of a low level is applied. The band-pass filter 12 passes only an AM helper signal AM-HEL having a certain information with respect to the PAL plus of the combined video signal inputted thereto due to a characteristic as shown in Fig. 4. The AM helper signal AM-HEL outputted from the band-pass filter 12 is outputted to the multiplier 14 and the color subcarrier wave reproducing circuit 22 of the output circuit 20 through a switch 13 which is controlled by the play back signal PB of a low level.

A synchronous dividing and signal generating unit 21 of the color subcarrier wave output circuit 20 received a combined picture signal from the switch 11 in a recording mode generates a helper marker signal H-M, a horizontal blanking signal H-B, a clamping pulse CLP-P, and a sandcastle signal SSC. Thereafter, an AND-gate AN1 ANDs the helper marker signal H-M, in which the helper signal is a high level from the starting line and the ending line, and the horizontal blanking signal H-B and outputs the helper maker signal Shm which indicates a region that the horizontal blanking signal H-B is a low level of the regions that the helper marker H-M is a high level, and the color subcarrier waver detector 22 reproduces a color subcarrier wave Fsc using an AM helper signal AM-HEL which is a output signal of the sandcastle signal SSC and the switch 13.

When the thusly reproduced color subcarrier waver Fsc is applied to the multiplier 14, the multiplier 14 demodulates the AM helper signal transmitted from the band-pass filter 12 using the color subcarrier wave Fsc, and the thusly demodulated AM helper signal is filtered by the low-pass filter 15 as shown in Fig. 5 and outputted to the clamping circuit 31 of the signal outputting unit 30.

In addition, the delay unit 43 of the delay unit 40 compensates the delay time needed for demodulating the AM helper signal when the combined video signal is transmitted through the band-pass filter 12, the switch 13, the multiplier 14, and the low-pass filter 15, that is, for the time that the helper signal demodulator demodulates the helper signal, and outputs the thusly time-compensated combined video signal CVBS to the clamping circuit 32 of the recording PAL plus signal output unit 30.

The recording PAL plus signal output unit 30 outputs a base band helper signal as shown in Fig. 3 as the switch 33 selects a clamping signal from the clamping circuits 31 and 32 in accordance with a control of the helper marker signal Shm outputted from the AND-gate AN1 of the color carrier wave output unit 20. That is, as shown in Fig. 6, while the helper marker signal Shm is a high level, the output signal of the clamping signal 31 in which the output signal of the low-pass filter 15 is clamped to a level "A", and while the helper marker signal Shm is a low level, the output signal of the clamping circuit 32 in which the combined video signal CVBS which is delayed for a predetermined time by the delay unit 43, and the base band helper signal of the PAL plus is outputted as shown in Fig. 3.

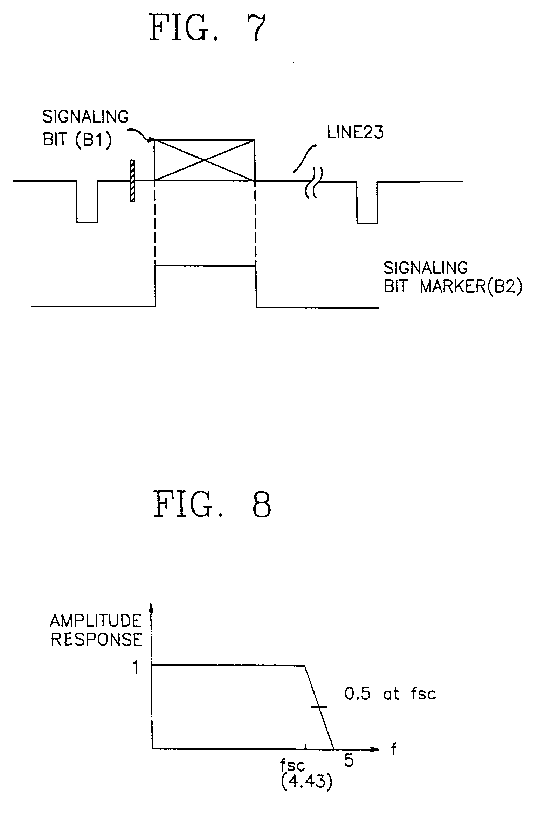

Meanwhile, the signaling bit processor 80, as shown in Fig. 7, detects the signal bit data BS1 carried on the combined video signal outputted from the switch 11 of the helper signal demodulator 10 and outputs a signal bit marker BS2. In addition, the signaling bit processor 80 outputs a PAL identification signal BS3 which indicates whether or not the combined video signal outputted from the signal bit BS1 is a normal PAL video signal. The signal bit is carried on the 23rd scanning line of the 25 scanning lines.

The base band helper signal is clamped by the clamping circuit 34 and inputted into the switch 35, and the switch 35 selects an output signal of the clamping circuit 34 while the signal bit marker BS2 outputted from the signaling bit processor 80 is a low level, and selects signal bit data BS1 outputted from the signaling bit processor 80 while the signal bit marker BS2 is a high level, and adds the signal bit data BS1 to the base band helper signal. Thereafter, the output signal of the switch 35 is applied to the switch 36, and the switch 36 selects the output signal of the switch 35 in case that the combined video signal inputted thereto is a PAL plus signal, and selects an AM helper signal in accordance with a PAL identification signal BS3 in case that the combined video signal is not the PAL plus signal, and bypasses the demodulation with respect to the help signal. A color/luminance dividing unit 37 divides the output signal of the switch 36 into a recording luminance signal Yrec and a recording color signal Crec. The thusly divided luminance signal Yrec and color signal Crec are recorded on tape. Here, since the spectrum of the help signal is 3.5MHz, the helper signal is well recorded with respect to the luminance channel. Here, a base band helper signal is contained in the recording luminance signal Yrec, and the base band helper signal is not contained in the recording color signal Crec.

Meanwhile, when a signal is processed for a recording, the signal is not recorded on the tape, and the recording color signal Crec of the recording PAL plus signal output unit 30 is inputted to the switch 63 through the switch 61 and the delay unit 62 of the reproducing color signal output unit 60, and the luminance signal Yrec is inputted to the switch 41 of the delay unit 40 and to the switch 71 of the helper signal remodulator 70.

At this time, the base band helper signal contained in the recording luminance signal Yrec inputted to the switch 71 is modulated by the low-pass filter 72, the clamping circuit 73, and the multiplier 74 in order. However, since the phase of the color subcarrier wave Fsc outputted from the color subcarrier wave output unit 20 is synchronous with respect to a U-axis which indicates a color difference signal of the AM helper signal AM-HEL inputted to the switch 11, the phase thereof differs from the phase of the recording luminance signal Yrec. Therefore, the phase of the color subcarrier wave Fsc is adjusted and outputted to the multiplier 74 through the switch 78. Thereafter, the multiplier 74 mixes the recording luminance signal Yrec outputted from the clamping circuit 73 with the frequency of the color subcarrier wave Fsc, of which the phase thereof is adjusted, and outputted to the Nyquest low-pass filter 75. The Nyquest low-pass filter 75 filters the signal outputted from the multiplier 74 as shown in Fig. 8, and outputs the signal to the switch 63 of the reproducing color signal output unit 60.

Since the switch 63 selects a recording color signal Cres delayed by the delay unit 62 in case that the helper marker signal Shm is a low level, and the switch 63 selects a helper signal modulated by the helper signal remodulator 70 in case that the helper marker signal Shm is a high level, the reproducing color signal output unit 60 outputs a remodulated helper signal-added reproducing color signal Cpal. Thereafter, the switch 64 selects the output signal of the switches 61 and 63 in accordance with a control of the PAL identification signal BS3.

In addition, when the recording luminance signal Yrec inputted to the switch 41 of the delay unit 40 is delayed by the delay unit 42 for a predetermined time and inputted to the reproducing luminance signal output unit 50, the clamping circuit 51 clamps the recording luminance signal Yrec and outputs to the switch 52. The switch 52 selectively outputs between the output signal of the clamping circuit 51 and a direct current voltage DC1 in accordance with a helper marker signal Shm, so that the base band helper signal is removed from the luminance signal. The output signal of the switch 54 is applied to the switch 54 through the clamping circuit 53, and the signal bit data BS1 of the switch 54 is added to the output signal of the clamping circuit 53 in accordance with a control of the signal bit maker BS2. Thereafter, the switch 55 selects the output signal of the switch 54 in accordance with the PAL identification signal BS3, and the PAL plus luminance signal Ypal is outputted.

Though the above-described operation, when the recorded PAL plus signal is reproduced, the PAL plus signal of the base band as shown in Fig. 3 is converted into a AM helper signal as shown in Fig. 2. That is, when the playback signal PB is a high level, the switches 11, 13, 61, 71, and 78 are switched, respectively, and the reproducing color signal PB-C reproduced from the tape is inputted to the switches 13 and 61, and the base band helper signal BB-HEL of the reproducing luminance signal PB-Y is inputted to the switches 11 and 71.

when a synchronous dividing and signal generating unit 21 received the base bad helper signal BB-HEL through the switch 11 generates a horizontal blanking signal h-B, a clamping pulse CLP-P, and a helper marker signal H-M, the helper blanking signal H-M and the horizontal blanking signal H-B logically combined by a AND-gate AN1 and converted into a helper marker signal Shm.

At this time, when the reproducing color signal PB-C outputted from the switch 13 is inputted to the color subcarrier wave detector, the color subcarrier wave detector 22 reproduces a color carrier wave Fsc and outputs to the helper signal remodulator 70. the phase of the thusly reproduced color carrier wave Fsc is adjusted by the shifter 76 and inputted to the multiplier 74 through the switch 78. In addition, the base band helper signal BB-HEL of the reproducing luminance signal PB-Y selected by the switch 71 is applied to the low-pass filter 72, the clamping circuit 73, and the multiplier 74, in order. In the multiplier 74, the output signal of the clamping circuit 73 is remodulated by the color subcarrier wave Fsc and is filtered by the Nyquest low -pass filter 75 and is outputted to the switch 63 of the reproducing color signal output unit 60.

The recording luminance signal Yrec inputted to the switch 41 is delayed by the delay unit 42 for a predetermined time, and is inputted to the switch 52 through the clamping circuit 51 of the reproducing luminance signal output unit 50, and the switch 52 selects the output signal of the clamping circuit 51 and the direct current voltage DC1 having a predetermined level in accordance with a helper marker signal Shm, and the switches 52 removes the base band helper signal BB-HEL from the recording luminance signal Yrec and outputs to the switch 54 through the clamping circuit 53. In the switch 54, the signal bit data BS2 is added to the output signal of the clamping circuit 53 and is outputted to the switch 55, and the switch 55 outputs a luminance signal Ypal of the PAL plus in accordance with a control of the PAL identification signal BS3. When the PAL identification signal BS3 outputted from the signaling bit processor 80 is not a PAL plus signal, the switch selects the base band helper signal BB-HEL outputted from the switch 71.

In addition, the reproducing color signal PB-C inputted to the switch 61 is delayed by the delay unit 62 for a predetermined time, and the switch 63 selects a remodulated helper signal which is a output signal of the Nyquest low -pass filter 75 in case that the helper marker signal Shm is a high level, and the switch 63 selects the delayed reproducing color signal PB-C which is an output signal of the delay unit 62 in case that the helper marker signal is a low level. Thereafter, the switch 64 selects the output signal of the switches 61 and 63 in accordance with a control of the PAL identification signal BS3, and the PAL plus reproducing color signal Cpal is outputted. When the PAL identification signal BS3 outputted from the signaling bit processor 80 is not the PAL plus signal, the switch 64 selects the reproducing color signal PB-C outputted from the switch 61.

As described above, the present invention is directed to recording by demodulating the helper signal in a recording mode, and is directed to converting to the original signal in a reproducing mode, so that a better recording and reproducing picture can be achieved.

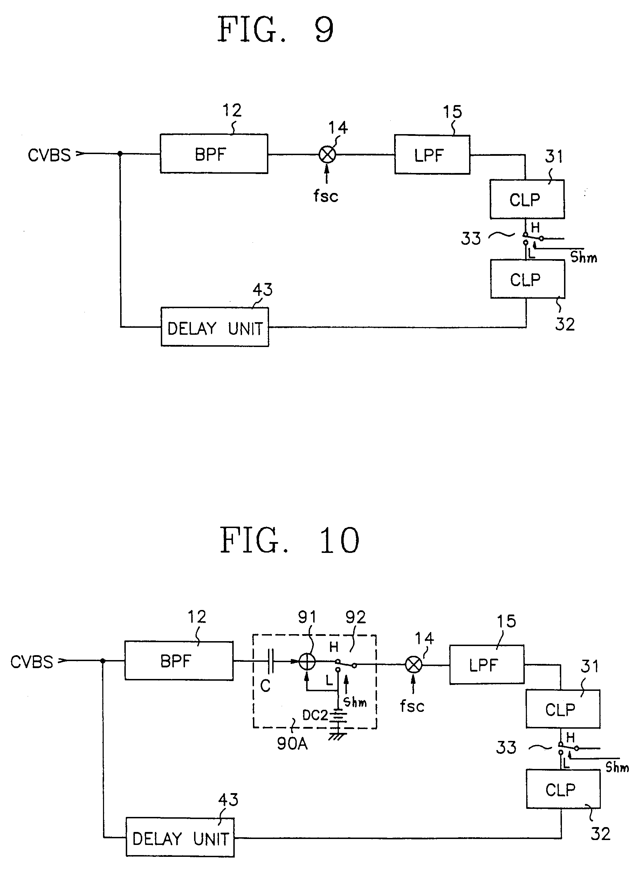

Fig. 9 shows a circuit for generating a base band helper signal using the demodulated helper signal and a combined video signal by demodulating the helper signa, which includes a band-pass filter 12, a multiplier 14, a low-pass filter 15, clamping circuits 31 and 32, a delay unit 43, and a switch 33.

The combined video signal CVBS is inputted, the band-pass filter 12 filters a constant band-pass component, as shown in fig. 4, from the combined video signal. The thusly filtered band-pass component is mixed with a certain frequency Fsc by the multiplier 14, and a low-pass component, as shown in Fig. 5, is passed by the low-pass filter 15, and as a result, the demodulated helper signal is inputted to the clamping circuit 31. At this time, the clamping circuit 31 clamps the level of the signal outputted from the low-pass filter 15 to be a predetermined level. In addition, the combined video signal CVBS delayed by the low-pass filter 15 for a predetermined time is clamped by the clamping circuit 32 to be a predetermined level. Here, the delay unit 43 is directed to compensating the delay time caused while the combined video signal is filtered with respect to the band-pass and low-pass for the demodulation of the helper signal. While the helper marker signal Shm is a high level, the switch 33 selects the output signal of the clamping circuit 31, and while the helper marker signal is a low level, the switch 33 selects the output signal of the clamping circuit 32, so that the base band helper signal is obtained as shown in Fig. 3.

However, when the helper signal is demodulated in the above-described method, when the combined video signal CVBS passes through the band-pass filter 12, the AM helper signal, which is an assistant signal, including a main signal passes therethrough. At this time, since the passing AM helper signal corresponds to 30% of the peak level Vpp of the combined video signal CVBS, the peak level Vpp of the main signal is 10/3 times rather than the peak level of the helper signal. Therefore, since the variation width of the main signal increases by the clamping circuit 31, clamping errors occur. That is, as shown in Fig. 3, through there should be no variation between levels A and B at 350mV in the recording base band helper signal, variations occur due to the clamping errors.

Fig. 10 shows a helper signal demodulator of a embodiment of the present invention, which is capable of preventing clamping error by outputting a direct current voltage component having a constant level within a main signal region and by removing the main signal therefrom. As shown therein, there is shown a band-pass filter 12, a multiplier 14, a low-pass filter 15, clamping circuits 31 and 32, a delay unit 43, a switch 33, and a level compensator 90a for increasing the helper signal region of the output signal of the band-pass filter 12 to a predetermined level and for outputting a direct current voltage in the main signal region. the level compensator 90A includes an adder 91 for increasing the level of the output signal of the band-pass filter 12 to a predetermined level, a switch 92 for removing the main signal by selectively outputting the output signal of the direct current voltage component DC2 and the adder 91. Here, the Capacitor in the drawing denotes an AC coupling.

The operation and effects of the helper signal demodulator of an embodiment according to the present invention will now be explained with reference to the accompanying drawings.

To begin with, when the helper signal is inputted to the band-pass filter 12, the band-pass filter 12 passes a band-pass component and outputs to the level compensator 90A. The level compensator 90A increases the level of the signal outputted from the band-pass filter 12 up to the level of the direct current voltage DC2. The switch 92 selects an output signal of the adder 91 in the region that the helper marker signal Shm is a high level, and the switch 92 selects a direct current voltage component DC2 in the region that the helper marker signal is a low level, so that the main signal is removed from the combined video signal. The helper signal of which the main signal is removed by the level compensator 90A is mixed with a certain frequency Fsc by the multiplier 14, and only the low-pass signal of the thusly mixed signal is outputted to the switch 33 which is fixed to a certain level. In addition, the combined video signal SVBS delayed by the delay unit 43 for a predetermined tom is outputted to the switch 33 fixed to a certain level by the clamping circuit 32. Therefore, the switch 33 selects a helper signal of the clamping circuit 31 when the helper signal Shm is a high level, and selects a output signal of the clamping circuit 32 when the helper signal Shm is a low level. Therefore, since the helper signal is inputted to the clamping circuit 31 so that the main signal region has a direct current voltage component through the level compensator 90A, the clamping error due to the main signal is removed.

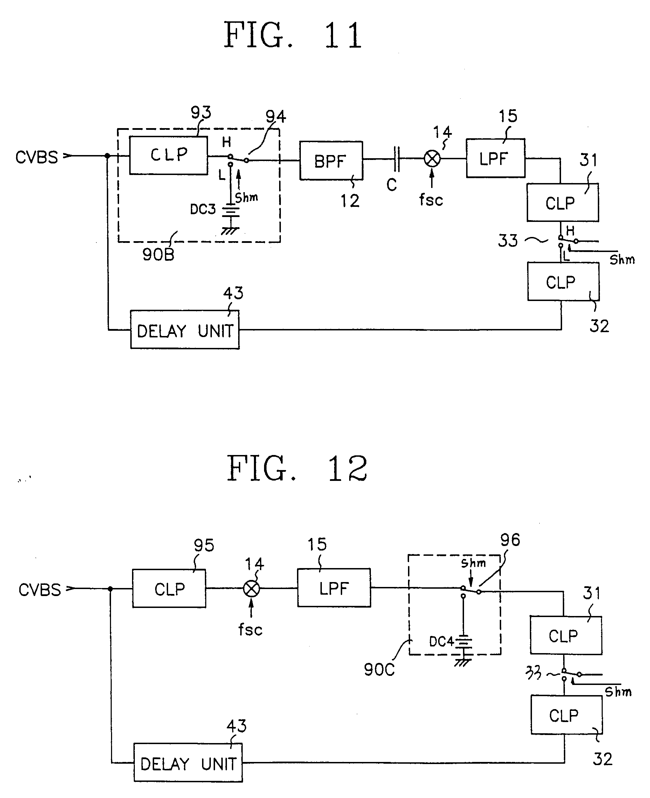

Fig. 11 shows a helper signal demodulation circuit of a second embodiment according to the present invention, which is directed to providing a level compensator 90B, disposed before the band-pass filter 12, for removing the main signal as the switch 93 selects the direct current voltage component DC3 and the output signal of the clamping circuit 93 in accordance with a helper marker signal Shm after fixing the combined video signal CBVS to be a certain level by using the clamping circuit 93. That is, the helper signal demodulator 90B is directed to removing the main signal component which corresponds to the video signal region by providing the switch 94 selects the output signal of the clamping circuit 93 when the helper marker signal Shm is a high level, and selects the direct current voltage component DC3 when the output signal of the clamping circuit 93 is a low level after the combined video signal is maintained to have a predetermined level by the clamping circuit 93 of the level compensator 90B when the combined video signal CVBS is inputted thereto. In addition, since the operation after the band-pass filter 12 passed a certain band component out of the output signal of the level compensator 90B is the same as the previous embodiment, so the description with respect thereto will be omitted.

Fig. 12 shows a helper signal demodulator of a third embodiment according to the present invention, which provides a clamping circuit 95 instead of adopting the band-pass filter 12 of Fig. 9 and a level compensator 90C between the low-pass filter 15 and the clamping circuit 31. When the clamping circuit 95 maintains the combined video signal CVBS to have a predetermined level, the multiplier 14 mixes the combined video signal CVBS to have a predetermined frequency Fsc, and the thusly mixed signal is filtered to have a low-pass component and outputted to the level compensator 90C. The switch 96 of the level compensator 90C selects the output signal of the low-pass filter 15 when the helper marker signal Shm is a high level, and the level compensator 90c selects a direct current voltage component DC4 when the helper marker signal Shm is a low level, so that the main signal is removed. When the clamping circuits 31 and 32 maintain the output signal of the level compensator 90C and the output signal of the delay unit 43, the switch 33 is switched in accordance with a helper marker signal Shm, and when the main signal region corresponding to the output signal of the delay unit 43 is converted into the direct current voltage DC4, the helper signal is added.

As described above, the helper signal demodulator of the present invention is directed to outputting a helper signal of which the main signal region is converted into the direct current voltage component in a demodulation mode of the helper signal, thus preventing clamping error occurrences.

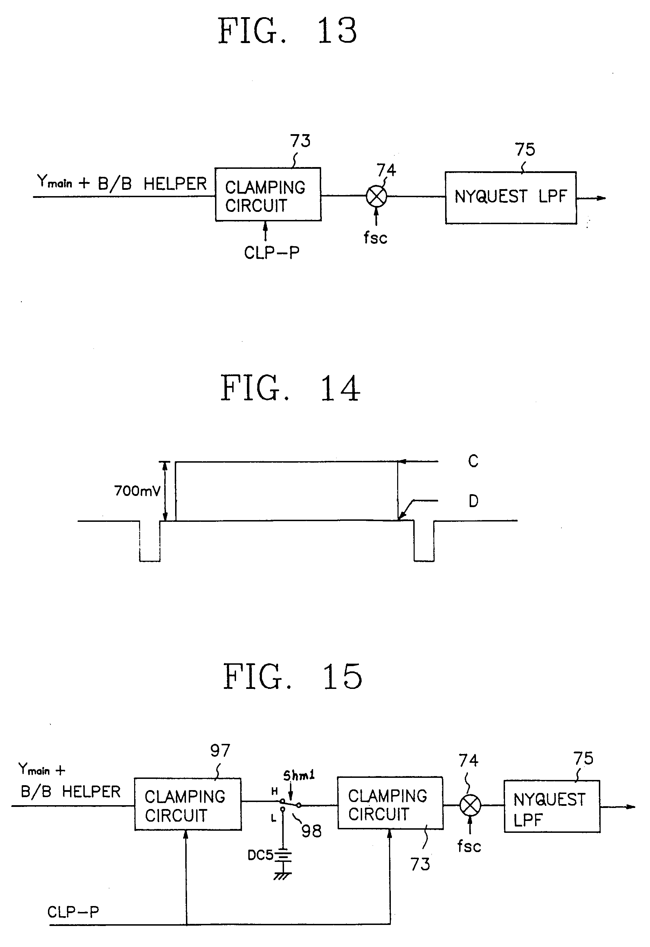

Meanwhile, Fig. 13 shows a circuit for removing error signal by preventing the direct current voltage variation during a helper signal remodulation, which includes a clamping circuit 73, a multiplier 74, and a Nyquest low-pass filter 75.

When the combined video signal CVBS containing the helper signal is inputted, the band-pass component is filtered and modulated into a certain frequency. The low-pass component is filtered from the thusly modulated signal. At this time, when a reproducing operation is performed, the main luminance signal Ymain and the helper signal B/B Helper of the base band are clamped by the clamping circuit 73. The multiplier 74 modulates the thusly clamped signal to a color subcarrier wave frequency (Fsc=4.43 MHz). Thereafter, the helper signal modulated by the multiplier 74 is filtered by the Nyquest low-pass filter 75, and the remodulated helper signal is outputted.

However, of the 625 lines, only the 144 lines are a helper signal, and the remaining lines are a vertical blanking interval and a main signal (432 lines), and the vertical blanking interval always has the same wave form, but the active line interval of the main luminance signal Ymain having a certain wave form as shown in Fig. 14 is changed to a signal having a width of 700mV in accordance with a video signal. That is, in Fig. 14, the level of the main luminance signal Ymain is changed to levels of "C" and "D" irrespective of the helper signal. In more detail, this level variation causes a clamping error in the clamping circuit 73. That is, a black level in the helper signal, as shown in Fig. 3, is fixed to "B", but the level "B" moves to "B+β", the value β is mixed with the color sub-carrier wave frequency Fsc by the multiplier 74, so that a variation "βFsc" occurs thereby. Therefore, the variation of the carrier wave power caused by the level variation of the black or white signal in the active interval of the main luminance signal causes distortion of television picture.

Fig. 15 shows a helper signal remodulation circuit capable of outputting a constant direct current voltage DC5 in an active interval of the main signal by directly outputting the helper signal clamped in the helper interval after clamping the helper signal. As shown therein, the helper signal remodulation circuit includes a clamping circuit 97 for clamping the signal in which the main luminance signal Ymain and the base band helper signal B/B Helper are mixed in accordance with a clamping pulse CLP-P, and a switch 98, disposed in front of the clamping circuit, for selecting an output signal of the clamping circuit 97 when the helper marker signal Shm is a high level and for selecting a direct current voltage DC5 of a constant level when the helper marker signal is a low level.

The operation and effects of the helper signal remodulation circuit will now be explained with reference to the accompanying drawings.

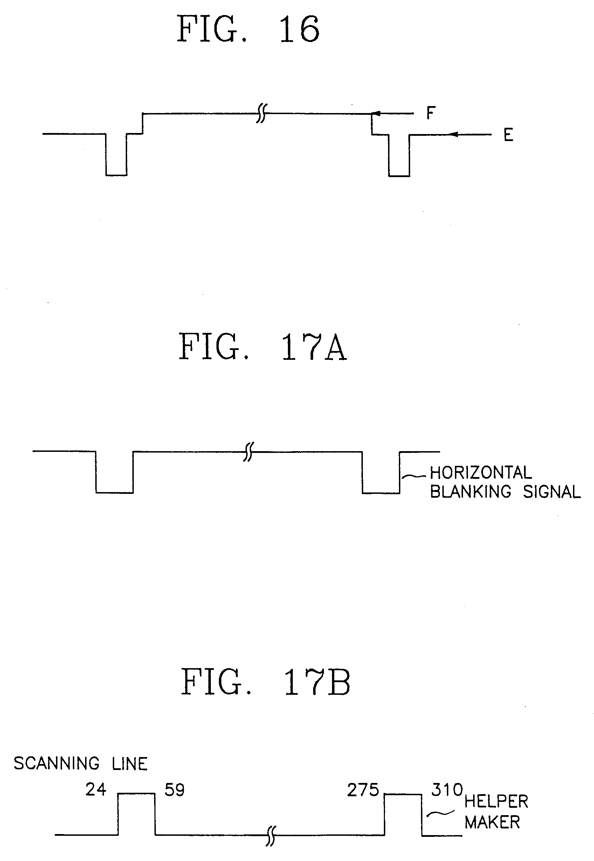

To begin with, the helper signal is modulated, recorded, and reproduced by the PAL plus VCR, the clamping circuit 97, in which the main luminance signal Ymain and the helper signal B/B Helper are inputted thereto, clamps the signal in accordance with a clamping pulse CLP-P and outputs a signal with a level "F" as shown in Fig. 16. One terminal of the switch 98 is connected to the direct current voltage DC5 of a constant level, and the level of the direct current voltage DC5 is denoted as "F" in Fig. 16. The helper marker signal Shm1 ORs a signal, as shown in Fig. 17A, which the horizontal blanking signal for maintaining a high level for a horizontal blanking interval is inverted, and a helper marker signal as shown in Fig. 17B, so that the signal is a high level within a helper signal interval and the signal is a high level within the horizontal blanking interval.

The switch 98 is switched in accordance with a helper marker signal H-M, and when the helper marker signal H-M is a high level, the switch 98 selects an output signal of the clamping circuit 97 and outputs the helper signal, and when the helper marker signal is a low level, the switch 98 converts the active interval of the luminance signal Ymain into a direct current voltage DC5 of a constant level. Here, the active interval of the main luminance signal Ymain outputs a signal with a level "F" as shown in Fig. 16.

Thereafter, when the clamping circuit 73 clamps the output signal of the switch 96 in accordance with a clamping pulse CLP-P, the multiplier 74 modulates the output signal of the switch 96 to the color subcarrier wave frequency, and thusly modulated signal is filtered by the Nyquest low-pass filter 75, of which the interference component is removed, so that a helper signal remodulated is outputted.

In addition, in the clamping circuit 97, since the clamping error occurs due to the level variation of the main luminance signal Ymain, the level of the helper signal changes from the level "E" to the level "E+β" as shown in fig. 16. That is, the direct current level of the main luminance signal Ymain changes by "β" in the active interval. The variation amount "β" is small compared with the variation amount of the original main luminance signal Ymain, however, the variation amount is converted into the direct current voltage DC5 having a constant level by the switch 98, there is no clamping errors due to the variation of the main luminance signal Ymain in the clamping circuit 73. Therefore, even the output signal of the clamping circuit 73 is modulated to the color subcarrier frequency Fsc by the multiplier 74, and is inputted to the Nyquest low-pass filter 75, the level of the carrier power does not change.

As described above, the helper signal remodulator circuit according to the present invention is directed to removing the clamping error due to the variation of the main luminance signal by converting the active interval of the main luminance signal into a direct current voltage, thus removing distortion of the signal by decreasing the variation of the carrier wave power.

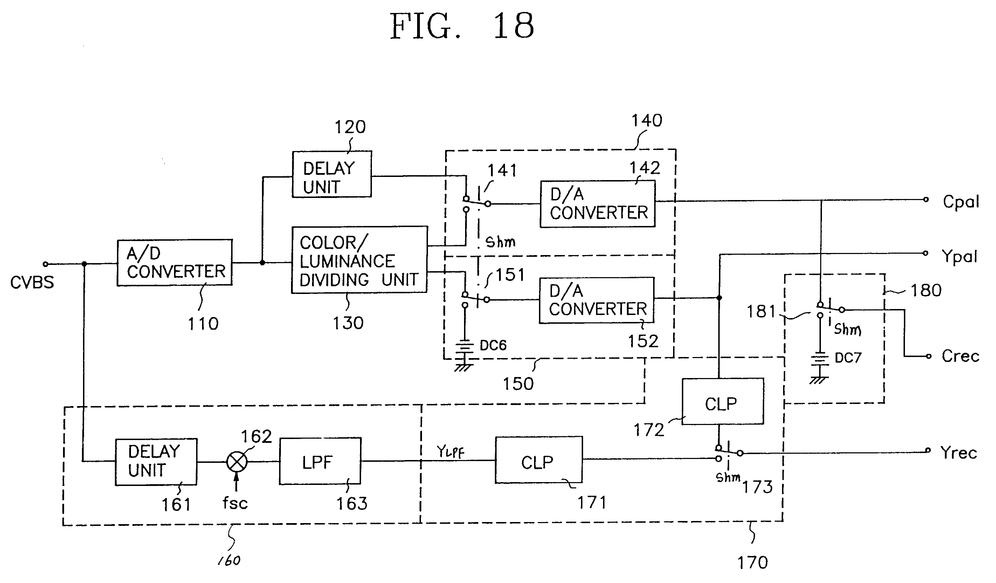

Meanwhile, Fig. 18 shows a helper signal processor for preventing deterioration of picture by compensating the phase of the helper signal and the color signal without demodulating the demodulated helper signal, compared with Fig. 1 which corresponds to demodulating the PAL plus signal which is a assistant signal when recording or reproducing using the S-VHS VCR, and demodulating to the original signal when reproducing the signal.

As shown therein, there is shown an analog/digital converter 110 for converting an analog combined video signal into a digital signal, a delay unit 120 for delaying the output signal of the analog/digital converter 110 for a predetermined time, a luminance/color dividing unit 120 for dividing the output signal of the analog/digital converter 110 into a luminance signal Y and a color signal C, a reproducing color signal generating unit 140 for switching the color signal divided by the luminance/color dividing unit 130 and the output signal of the delay unit 120 ad for converting the thusly switched signal into a digital/analog signal and for outputting a reproducing color signal Cpal, a reproducing luminance signal generating unit 150 for removing the helper signal by switching the luminance signal divided by the luminance/color dividing unit 130 with a direct current voltage and for converting the signal into a digital/analog signal and for generating a reproducing luminance signal Ypal, a demodulator 160 for delaying the analog combined video signal for a predetermined time and for demodulating the signal to a color subcarrier wave frequency Fsc, and a recording luminance signal generating unit 170 for clamping the output signals of the demodulator 160 and the reproducing luminance signal generating unit 150 to be a certain level and for generating a recording luminance signal Yrec, and a recording color signal generating unit 180 for switching the output signal of the reproducing color signal generating unit 140 with a direct current voltage and for generating a recording color signal Crec.

The reproducing color signal generating unit 140 includes a switch 141 which selects a helper signal of the delay unit 120 when the helper marker signal Shm is a high level, and selects a color signal C divided from the luminance/color dividing unit 130 when the helper marker signal Shm is a low level, thus adding the helper signal to the color signal C, and a digital/analog converter 142 for converting the output signal of the switch 141 into a digital/analog signal.

The reproducing luminance signal generating unit 150 includes a switch 151 which selects direct current voltage DC6 when the helper marker signal Shm is a high level and selects a luminance signal Y divided by the luminance/color dividing unit 130 when the helper marker signal Shm is a low level, thus removing the helper signal from the luminance signal Y, and a digital/analog converter 152 for converting the output signal of the switch 151 into a digital/analog signal.

The demodulator 160 includes a delay unit 161 for delaying the combined video signal CVBS for a predetermined time, a multiplier 162 for demodulating the output signal of the delay unit 161 to a color subcarrier wave frequency Fsc, and a low-pass filter 163 for passing a low-pass component of the output signal of the multiplier 162. Here, the delay unit 161 compensates the delay time of the luminance/color dividing unit 130.

The recording luminance signal generating unit 170 includes a clamping circuit 171 for clamping the output signal of the demodulator 160 to a certain level, a clamping circuit 172 for clamping the output signal of the reproducing luminance signal generating unit 150 to a certain level, and a switch 173 for switching the output signal of the clamping circuits 171 and 172 in accordance with a helper marker signal H-M and for outputting a recording luminance signal Yrec.

The recording color signal luminance generating unit 180 includes a switch 181, which selects a direct current voltage DC7 when the helper marker signal Shm is a high level and selects a color signal Cpal of the reproducing color signal generating unit 140 when the helper marker signal Shm is a low level, for outputting a recording color signal Crec in which the helper signal is removed from the reproducing color signal Cpal.

The operation and effects of a helper signal processor of a second embodiment according to the present invention will be explained with reference to the accompanying drawings.

To begin with, the combined video signal CVBS containing the helper signal is converted into an analog/digital signal by the analog/digital converter 110. While the thusly converted analog/digital signal is divided into a luminance signal Y and a color signal by the luminance/color dividing unit 130, the delay unit 120 delays the operation of the luminance/color dividing unit 130 for the time of the delay. At this time, the luminance signal Y outputted from the luminance/color dividing unit 130 contains a helper signal.
the reproducing color signal generating unit 140 switches between the output signal of the delay 120 and the color signal C outputted from the luminance/color dividing unit 130 and outputs a reproducing color signal Cpal by converting the signal into a digital/analog signal. That is, in the reproducing color signal generating unit 140, the switch 141 an AM modulated helper signal outputted from the delay unit 120 when the helper marker signal Shm is a high level, and selects a color signal C of the luminance/color dividing unit 130 when the helper marker signal is a low level. Thereafter, the digital/analog converter 142 outputs a reproducing color signal Cpal by converting the output signal of the switch 141 into a digital/analog signal. Here, the switch 141 adds a helper signal to the reproducing color signal Cpal.

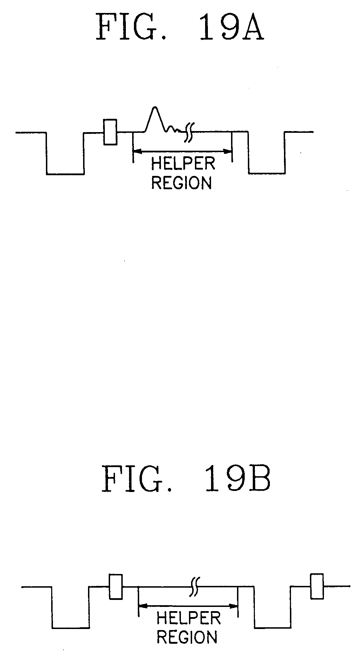

In addition, in the reproducing luminance signal generating unit 150, the switch 151 selects a direct current voltage DC6 when the helper marker signal Shm is a high level, and selects a luminance signal Y of the luminance/color dividing unit 130 when the helper marker signal is a low level. In addition, the digital/analog converter 152 outputs a reproducing luminance signal Ypal by converting the output signal of the switch 151 into a digital/analog signal. Here, the switch 151 is directed to removing the helper signal component from the luminance signal Y divided by the luminance/color dividing unit 130. In addition, the luminance signal, as shown in Fig. 19A, outputted from the luminance/color dividing unit 130 is outputted through the reproducing luminance signal generating unit 150 as shown in Fig. 19B, so that the luminance signal Y becomes a block level within the helper interval.

Meanwhile, the demodulator 160 received the combined video signal CVBS containing the helper signal demodulates the helper signal, and the delay unit 161 delays the combined video signal CVBS for a predetermined time, and the multiplier 161 demodulates the output signal of the delay unit 161 to a certain frequency Fsc, and the low-pass filter 163 passes only the luminance signal Ylpf.

The recording luminance signal generating unit 170 receives a output signal Ypal of the reproducing luminance signal generating unit 150 and an output signal Ylpf of the demodulator 160. In addition, clamping circuits 171 and 172 of the recording luminance signal generating unit 170 clamps the output signal Ylpf of the demodulator 160 and the output signal Ypal of the reproducing luminance signal generating unit 150 to a certain level, respectively. Thereafter, the switch 173 switches the output signal of the clamping circuits 171 and 172 and outputs the recording luminance signal Yrec as shown in Fig. 3. This luminance signal Yrec is recorded on a luminance region of the S-VHS tape.

In addition, in the recording color signal generating unit 180, the switch 181 selects a direct current voltage DC7 when the helper marker signal Shm is a high level, and selects an output signal Cpal of the reproducing color signal generating unit 140 when the helper marker signal is a low level, so that the recording color signal Crec, in which the helper signal is removed, is outputted.

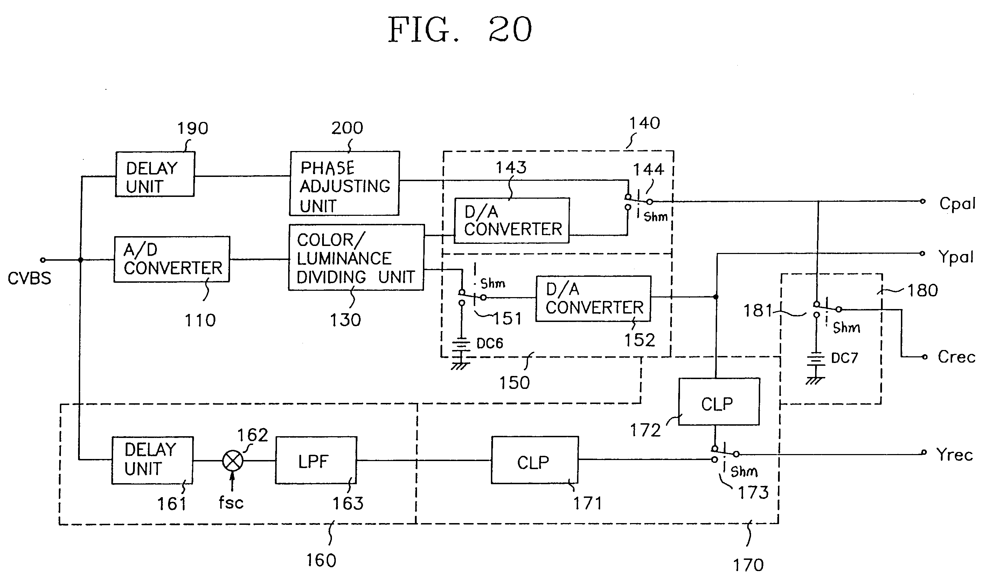

The above-mentioned circuit is adopted to the digital method. In case that the circuit is adopted to the analog method, since signal distortion occurs in the helper signal, an improved circuit should be adopted as shown in fig. 20.

Fig. 20 shows a helper signal processor of a third embodiment according to the present invention, which includes the analog/digital converter 110, a luminance/color dividing unit 130, a reproducing luminance signal generating unit 150, a delay unit 190 for delaying an analog combined video signal for a predetermined time, a phase adjusting unit 200 for controlling the phase of the output signal of the delay unit 190, a reproducing color signal generating unit 140, a demodulator 160, a recording luminance signal generating unit 170, and a recording color signal generating unit 180.

The operation and effects of the helper signal processor will now be explained with reference to the accompanying drawings.

To begin with, the combined video signal CVBS containing a helper signal is converted into an analog/digital signal by the analog/digital converter 110, and the thusly converted signal is divided into a luminance signal Y and a color signal C by the luminance/color dividing unit 130. Here, a helper signal is contained in the luminance signal Y divided by the luminance/color dividing unit 130. The delay unit 190 delays the analog combined video signal CVBS by the delay time of the operation of the luminance/color dividing unit 130, and the phase adjusting unit 200 controls the phase of the delayed signal and matches the phases of the helper signal and the main color signal C. In the analog method, since it is difficult to precisely adjust the delay time, the above-mentioned phase adjusting unit 200 is adopted in this embodiment, so that the phase of the helper signal becomes coincident with the phase of the color difference U.

Therefore, in the reproducing color signal generating unit 140, the switch 144 selects the output signal of the phase adjusting unit 200 when the helper marker signal Shm is a high level after the digital/analog converter 143 converts the color signal C of the luminance/color dividing unit 130 into a digital/analog signal, and selects an analog color signal of the digital/analog converter 143 when the helper marker signal is a low level, so that the reproducing color signal Cpal is outputted. Here, the switch 144 adds the helper signal to the reproducing color signal.

In addition, the reproducing luminance signal generating unit 150 outputs the reproducing luminance signal Ypal in the same process as shown in Fig. 18. Here, the switch 151 is directed to removing the helper signal contained in the luminance signal Y divided by the luminance/color dividing unit 130, and processes the luminance signal Y of Fig. 19A to be the luminance signal Y of Fig. 19B, so that the luminance signal Y becomes a black level in the helper interval.

Meanwhile, the recording luminance signal generating unit 170 outputs the recording luminance signal Yrec as shown in Fig. 3 through the same operation as shown in Fig. 18. In addition, the recording color signal generating unit 180 outputs the recording color signal Crec through the same operation as shown in Fig. 18.

As described above, the helper signal processor of the present invention is directed to preventing signal distortions by matching the phase of the helper signal to the phase of the main color signal, not remodulating the helper signal, so that better picture resolution can be obtained.

## Claims

1. A helper signal processing circuit for a PAL plus video cassette tape recorder, comprising:
signaling bit processing means for generating a signal bit data, a signal bit marker and a PAL identification signal in accordance with a combined video signal or a base band helper signal each containing an AM helper signal in accordance with a certain operation mode;
color subcarrier wave outputting means for receiving said combined video signal or said base band helper signal and for generating a helper marker signal and a color subcarrier wave in accordance with a certain operation mode;
delay unit means for delaying a combined video signal and a reproducing luminance signal or a base band helper signal in accordance with a certain operation mode;
helper signal demodulating means for demodulating said AM helper signal contained in the combined video signal in accordance with said color subcarrier wave in a recording mode;
recording PAL plus signal output means for generating a base band helper signal by switching the output signal of said helper signal demodulating means and said delay unit means in accordance with said helper marker signal, adding the signal bit data to the base band helper signal in accordance with the signal bit marker, switching the AM helper signal and the base band helper signal contained in the signal bit marker in accordance with the signal bit marker, and dividing the thusly switched into a recording luminance signal and a recording color signal;
helper signal remodulating means for filtering a reproducing luminance signal or a base band helper signal in accordance with an operation mode, for mixing the thusly filtered to a color subcarrier wave frequency of which a phase is properly adjusted, and remodulating a helper signal;
reproducing color signal outputting means for delaying a recording color signal or a reproducing color signal for a predetermined time in accordance with an operation mode, adding the helper signal remodulated by the helper signal remodulating means to the thusly delayed color signal in accordance with the helper marker signal, and outputting a color signal having the color signal or the remodulated helper signal in accordance with a PAL identification signal; and
reproducing luminance signal outputting means for removing a helper signal from the output signal of the delay unit means in accordance with a helper marker signal, adding a signal bit data to the luminance signal in which a helper signal is removed, and selectively outputting either a the base band helper signal or a recording luminance signal, which is outputted in accordance with an operation mode, respectively, or the luminance signal in which a signal bit data is added in accordance with a PAL identification signal.

2. The circuit of claim 1, wherein said helper signal demodulating means includes:
a first switch for selecting a combined video signal a base band helper signal in accordance with an operation mode;
a band-pass filter for passing a certain band-pass component out of the out put signal of said first switch;
a second switch for selecting a output signal of said band-pass filter and a reproducing color signal and for outputting the thusly selected signal to the color subcarrier outputting means in accordance with an operation mode;
a multiplier for mixing the output signal of said second switch with the color subcarrier wave and for demodulating the thusly mixed signal; and
a low-pass filter for passing a certain low-pass component out of the output signal of said multiplier.

3. The circuit of claim 1, wherein said color subcarrier wave outputting means includes:
a synchronous dividing and signal generating unit for generating a helper marker signal, a horizontal blanking signal and a sandcastle signal out of a combined video signal and a base band helper signal in accordance with a operation mode;
an AND-gate for ANDing the helper marker signal and the horizontal blanking signal of said synchronous dividing and signal generating unit and for outputting a helper marker signal; and
a color subcarrier reproducing unit for reproducing a color subcarrier wave in accordance with a sandcastle signal of the synchronous dividing and signal generating unit and a certain signal outputted from the helper signal demodulating means.

4. The circuit of claim 1, wherein said delay unit means includes:
a first delay unit for delaying the combined video signal and the base band helper signal in accordance with an operation mode and for outputting the thusly delayed signal to a recording PAL plus signal outputting means;
a switch for selecting a base band helper signal outputted from the recording luminance signal and the helper signal demodulating means in accordance with a operation mode; and
a second delay unit for delaying the output signal of said switch and for outputting the thusly delayed signal to a reproducing luminance signal outputting means.

5. The circuit of claim 1, wherein said recording PAL plus signal outputting means includes:
a first clamping circuit for clamping the output signal of the delay unit means to a predetermined level;
a second clamping circuit for clamping the output signal of the helper signal demodulating means to a predetermined level;
a third switch for switching the output signal of said first and second clamping circuits and for outputting a base band helper signal;
a third clamping circuit for clamping the output signal of said third switch;
a fourth switch for adding the signal bit data to the output signal of said third clamping circuit in accordance with a signal bit marker;
a fifth switch for selecting an AM helper signal and an output signal of said fourth switch in accordance with a PAL identification signal; and
a luminance/color dividing circuit for dividing the output signal of said fifth switch into a recording luminance signal and a recording color signal.

6. The circuit of claim 1, wherein said reproducing luminance signal outputting means includes:
a fourth clamping circuit for clamping the output signal of the delay unit means to a predetermined level;
a sixth switch for removing the helper signal from the output signal of said fourth clamping circuit in accordance with a helper marker signal;
a fifth clamping circuit for clamping the output signal of said sixth switch to a predetermined level;
a seventh switch for adding a signal bit data to the output signal of said clamping circuit in accordance with a signal bit marker; and
an eighth switch for selecting a signal selected between the recording luminance signal and the base band helper signal and an output signal of said seventh switch in accordance with a PAL identification signal in an operation mode.

7. The circuit of claim 1, wherein said helper signal remodulating means includes:
a ninth switch for selecting a base band helper signal and a reproducing luminance signal in accordance with a operation mode;
first and second phase shifters for adjusting the phase of the color subcarrier wave outputted from the color subcarrier wave outputting means;
a tenth switch for selecting output signals of said first and second phase shifters in accordance with an operation mode;
a low-pass filter for passing a low-pass component out of the output signal of said ninth switch;
a sixth clamping circuit for clamping the output signal of said low-pass filter to a predetermined level;
a multiplier for mixing the output signal of said sixth clamping circuit with a color subcarrier wave frequency of which the phase is adjusted and for remodulating the helper signal; and
a Nyquest low-pass filter for filtering the output signal of said multiplier.

8. The circuit of claim 7, wherein an output signal of said ninth switch is outputted to the reproducing luminance signal outputting means in accordance with a PAL identification signal.

9. The circuit of claim 1, wherein said reproducing color signal outputting means includes:
an eleventh switch for selecting a recording color signal and a reproducing color signal in accordance with an operation mode;
a delay unit for delaying the output signal of said eleventh switch for a predetermined time;
a twelfth switch for selecting the output signal of the helper signal remodulating means and the output signal of said delay unit in accordance with a helper marker signal and for adding the helper signal to the output signal of the delay unit; and
a thirteenth switch for selecting a output signal of said eleventh and twelfth switches in accordance with a PAL identification signal.

10. The circuit of claim 2, wherein said helper signal demodulating means includes a level compensator for increasing the helper signal of the output signal of the band-pass filter to a predetermined level and for converting the main signal to a direct current voltage having a predetermined level.

11. The circuit of claim 10, wherein said level compensator includes:
an adder for increasing the output signal of the band-pass filter up to the same level as the increase of the direct current voltage; and
a fourteenth switch for selecting the direct current voltage and the output signal of said adder in accordance with a helper marker signal and for outputting a constant direct current voltage.

12. The circuit of claim 11, wherein said fourteenth switch is directed to selecting the output signal of the adder and selecting the direct current voltage in a main signal interval.

13. The circuit of 10, wherein said level compensator includes:
a clamping circuit for clamping the combined video signal to a predetermined level; and
a fifteenth switch for selecting a direct current voltage in a main signal interval out of the output signal of said clamping circuit and for selecting the output signal of the clamping circuit.

14. The circuit of claim 10, wherein said clamping compensator further includes:
a clamping circuit for clamping the combined video signal inputted thereto instead of a band-pass filter to a predetermined level; and
a sixteenth switch for selecting the output signal of a low-pass filter and for selecting a constant direct current voltage in a main signal interval.

15. The circuit of claim 7, wherein said helper signal remodulating means includes:
a clamping circuit for clamping the output signal of the low-pass filter to a predetermined level; and
a seventeenth switch for outputting a helper signal outputted from said clamping circuit in a helper interval in accordance with a helper marker signal and for outputting a direct current voltage in a certain interval except for said helper interval.

16. A helper signal processing circuit for a PAL plus video cassette tape recorder, comprising:
reproducing signal processing means for dividing a combined video signal into a luminance signal and a color signal, removing the helper signal from the thusly divided luminance signal, outputting a reproducing luminance signal, adding a helper signal to the thusly divided color signal, and outputting a reproducing color signal; and
recording signal processing means for demodulating the helper signal of the combined video signal, adding the thusly demodulated helper signal to the reproducing luminance signal outputted from said reproducing signal processing means, outputting a recording luminance signal, removing the helper signal out of the reproducing color signal, and outputting a recording color signal.

17. The circuit of claim 16, wherein said reproducing signal processing means includes:
an analog.digital converter for converting an analog combined video signal into a digital combined video signal;
a luminance/color dividing unit for dividing the output signal of said analog/digital converter into a luminance signal and a color signal;
a delay unit for delaying the output signal of the analog/digital converter for a predetermined time;
a reproducing color signal generating unit for outputting a reproducing color signal by adding a helper signal to the color signal divided by said luminance/color dividing unit; and
a reproducing luminance signal generating unit for removing the helper signal out of the luminance signal divided by the luminance/color dividing unit and for outputting a reproducing luminance signal.

18. The circuit of claim 17, wherein said reproducing color signal generating unit includes:
a first switch for switching the output signal of the delay unit and the color signal of the luminance/color dividing unit in accordance with a helper marker signal and for adding a helper signal to the color signal; and
a digital/analog converter for converting the output signal of said first switch into an analog signal.

19. The circuit of claim 17, wherein said reproducing luminance signal generating unit includes:
a second switch for switching the luminance signal of the luminance/color dividing unit and a direct current voltage having a predetermined level in accordance with a helper marker signal; and
a digital/analog converter for converting the output signal of said second switch into an analog signal.

20. The circuit of claim 16, wherein said recording signal processing means includes:
a demodulator for delaying, for a predetermined time, and demodulating the analog combined video signal;
a recording luminance signal generating unit for switching the helper signal outputted from said demodulator and the reproducing luminance signal in accordance with a helper marker signal and for outputting a recording luminance signal by adding a helper signal to the reproducing luminance signal; and
recording color signal generating means for switching the reproducing color signal and a direct current voltage having a predetermined level, removing the helper signal out of the reproducing color signal, and for outputting a recording color signal.

21. The circuit of claim 20, wherein said recording luminance signal generating unit includes:
a first clamping circuit for clamping the output signal of the demodulator;
a second clamping circuit for clamping the reproducing luminance signal; and
a third switch for switching the output signals of said first and second clamping circuits in accordance with a helper marker signal and for outputting a reproducing color signal in which a helper signal is contained.

22. The circuit of claim 16, wherein said reproducing signal processing means includes:
an analog/digital converter for converting the analog combined video signal into a digital signal;
a delay unit for delaying the combined video signal for a predetermined time;
a phase adjusting unit for adjusting the phase of the helper signal outputted said delay unit to the phase of the color signal;
a reproducing luminance signal generating unit for removing the helper signal out of the luminance signal divided by the luminance/color dividing unit and for generating a reproducing luminance signal; and
a reproducing color signal generating unit for generating a reproducing color signal by adding a helper signal to the color signal divided by the luminance/color dividing unit.

23. The circuit of claim 22, wherein said reproducing luminance signal generating unit includes:
a fourth switch for switching the luminance signal of the luminance/color dividing unit and a direct current voltage having a predetermined level in accordance with a helper marker signal; and
a digital/analog converter for converting the output signal of said fourth switch into a analog signal.

24. The circuit of claim 22, wherein said reproducing color signal generating unit includes:
a digital/analog converter for converting the color signal outputted from the luminance/color dividing unit into an analog signal; and
a fifth switch for switching the output signal of said digital/analog converter and the output signal of the delay unit in accordance with a helper marker signal.
